# EUROPÄISCHE PATENTSCHRIFT

(11) **EP 2 588 255 B1**
(45) Veröffentlichungstag und Bekanntmachung des Hinweises auf die Patenterteilung: **25.02.2015**
(21) Anmeldenummer: 11745496.7
(22) Anmeldetag: 30.06.2011
(51) Int. Cl.: B07C 5/342

(54) **VERFAHREN ZUR KLASSIFIZIERUNG IN SAATGUTPARTIEN ENTHALTENER OBJEKTE UND ENTSPRECHENDE VERWENDUNG ZUR HERSTELLUNG VON SAATGUT**
METHOD FOR CLASSIFYING OBJECTS CONTAINED IN SEED LOTS AND CORRESPONDING USE FOR PRODUCING SEED
PROCÉDÉ DE CLASSIFICATION D'OBJETS CONTENUS DANS DES LOTS DE SEMENCES ET UTILISATION CORRESPONDANTE POUR PRODUIRE DES SEMENCES

(30) Priorität: 02.07.2010 DE 102010030908
(43) Veröffentlichungstag der Anmeldung: 08.05.2013
(73) Patentinhaber: Strube GmbH & Co. KG, 38387 Söllingen (DE)
(72) Erfinder: WOLFF, Antje, 23669 Timmendorfer Strand (DE)
(74) Vertreter: m patent group
(86) Internationale Anmeldenummer: PCT/EP2011/061071
(87) Internationale Veröffentlichungsnummer: WO 2012/001133

(56) Entgegenhaltungen:
- DE-A1- 4 339 285
- DE-C1- 19 506 041
- GB-A- 2 273 154
- JP-A- 9 001 086
- US-A1- 2007 262 002

## Beschreibung

Die vorliegende Erfindung betrifft ein Verfahren zur Klassifizierung in Saatgutpartien enthaltener Objekte, ein Verfahren zur Untersuchung, Bonitierung und/oder Aufbereitung von Saatgut und eine entsprechende Verwendung zur Herstellung von form- und größenkalibriertem Saatgut.

### Stand der Technik

Wenngleich die vorliegende Anmeldung hauptsächlich auf Zuckerrübensaatgut Bezug nimmt, können die beschriebenen Verfahren und Vorrichtungen auch in anderen Bereichen, beispielsweise bei der Untersuchung und/oder Aufbereitung von anderem Saatgut, wie Getreidesaatgut, vorteilhaft verwendet werden.

Modernes Hochleistungs-Zuckerrübensaatgut durchläuft bei seiner Herstellung eine Reihe aufwendiger Reinigungs- und Aufbereitungsschritte. Ziel dieser Schritte ist es, Saatgut möglichst homogener Größenverteilung zur Vereinfachung der maschinellen Ausbringung sowie möglichst hoher Qualität zu erzeugen. Idealerweise weist derartiges Saatgut einen Feldaufgang von 100% auf, d.h. pro ausgebrachtem Knäuel bzw. Samen kann die Ernte einer Zuckerrübe erwartet werden.

Um die Aberntbarkeit von Rübenäckern mit hoher Effizienz zu gewährleisten, wird angestrebt, möglichst ausschließlich monogermes Saatgut zu erzeugen. Die Gattung *Beta* bildet in ihren Wildformen bekanntermaßen polykarpe Samenknäuel, also Sammelfrüchte, in denen 1 bis 5 Samen mit dem verholzten Fruchtknoten eine Einheit bilden. Herkömmlicherweise bestand daher beim Rübenanbau die Notwendigkeit, die Rüben nach dem Feldaufgang mit hohem Arbeitsaufwand zu vereinzeln oder Knäuel vorab maschinell zu segmentieren. Moderne Züchtungen sind hingegen genetisch monogerm, so dass von diesen idealerweise ausschließlich einsamiges Saatgut erhalten wird. Das erhaltene Saatgut weist in der Praxis jedoch stets einen bestimmten Anteil bigermer Knäuel auf, welche mit herkömmlichen Verfahren nur unzureichend ausgesondert werden können.

Bei der Aufbereitung von Zuckerrübensaatgut, worunter im Rahmen dieser Anmeldung alle auf das Saatgut einwirkenden Schritte wie beispielsweise Reinigung und Form- und Größenkalibrierung verstanden seien, kommen beispielsweise Reinigungsverfahren mittels Siebungseinrichtungen, Trieuren und Vorrichtungen zur Stoppel- und Steinentfernung, Verfahren zur Größensortierung unter Verwendung mechanischer Rund- und Schlitzlochsiebe sowie Schwerkraftausleseverfahren zum Einsatz. Aus der geernteten Rohware gelangen nach der Aufbereitung in der Regel lediglich 20 % in den Verkauf.

Aufgrund der unregelmäßigen dreidimensionalen Struktur des Zuckerrübensaatguts, die die maschinelle Einzelausbringung auf dem Feld signifikant erschwert, wird das aufbereitete Saatgut anschließend in der Regel pilliert.

Die genannten, jeweils voneinander getrennten Saatgutaufbereitungsverfahren erweisen sich in der Praxis als aufwendig, da eine Reihe unterschiedlicher Maschinen zum Einsatz kommt, deren Einstellungen jeweils angepasst werden müssen, und zwischen denen ein Transport des Saatguts zu erfolgen hat. Auch sind die hierdurch erhaltenen Saatgutqualitäten häufig unzureichend. Insbesondere die Trennung von monogermen und bigermen Knäueln erweist sich als schwierig, da die Trennung kleinerer bigermer von größeren monogermen Knäueln oder bikarpen, aber monogermen Knäueln häufig mittels mechanischer Siebe nur unzureichend möglich ist.

Bei der gesetzlich vorgeschriebenen Reinheitsprüfung von Getreide- und Zuckerrübensaatgut wird herkömmlicherweise eine definierte Saatgutmenge (beispielsweise 100 g) manuell ausgezählt und der Anteil an sogenanntem Besatz, also von fremden Samen (Unkraut oder anderes Saatgut), Erdklumpen, Blattstücken, Stengeln, Stoppeln, Bruch und dergleichen ermittelt. Auch dieses Verfahren ist außerordentlich arbeitsaufwendig und in seinen Ergebnissen hochgradig von der Zuverlässigkeit des eingesetzten Personals abhängig.

Aus der DD 255 097 A1 ist eine Vorrichtung zum Sortieren von Pflanzensamen nach ihrer Dichte bekannt, bei dem ein erster, an sich bekannter Detektor (beispielsweise eine optische Längenmesseinrichtung) zur Bestimmung einer mechanischen Abmessung des Samens und ein zweiter, ebenfalls an sich bekannter Detektor (beispielsweise eine Röntgeneinrichtung) zur Ermittlung des Absorptionsgrads einer bestimmten elektromagnetischen Strahlung durch den Samen und eine Auswerte- und Zähleinheit verwendet werden.

Durch diese Vorrichtung werden zuvor vereinzelte Samen in einer Richtung einzeln vermessen und es wird anschließend in Messrichtung eine Absorptionseigenschaft dieser Samen bestimmt.

Nachteilig an dem Verfahren der DD 255 097 A1 ist neben der obligatorischen Vereinzelung und Einzeluntersuchung der Samen mit dem resultierenden geringen Durchsatz, dass die untersuchten Samen nur unzureichend erfasst werden und das Verfahren insbesondere bei unregelmäßig geformten Samen nicht sinnvoll verwendet werden kann.

Die US 2007/0262002 A1 schlägt ein Verfahren zur Detektion von Rissen im Inneren von Reiskörnern vor. Die Reiskörner werden hierzu vereinzelt und gleiten über eine Rutsche, wobei sie an einem bestimmten Punkt mit LED- oder Laserlicht bestrahlt werden. Licht, das die Körner durchstrahlt hat, wird mit einer CCD-Kamera erfasst. Um nicht Oberflächenkratzer fälschlicherweise als innere Risse im Reiskorn zu detektieren, schlägt diese Druckschrift die Verwendung von Licht unterschiedlicher Farben vor, das die Reiskörner durchstrahlt, wobei die zugehörigen Lichtquelle in spezifischen Winkeln zum durchleuchteten Reiskorn angeordnet sind. Aus einer Differenz der bei den unterschiedlichen Farben erhaltenen Bilder der CCD-Kamera kann auf Risse im Inneren eines Reiskorns geschlossen werden, da sich Oberflächenkratzer heraus subtrahieren. Das hier vorgeschlagene Verfahren eignet sich nicht zur dreidimensionalen Vermessung der untersuchten Objekte.

Es besteht daher weiterhin der Bedarf nach Verbesserungen bei der Untersuchung und Aufbereitung von Saatgutpartien.

### Offenbarung der Erfindung

Vor diesem Hintergrund schlägt die vorliegende Erfindung ein Verfahren zur Klassifizierung in Saatgutpartien enthaltener Objekte, ein Verfahren zur Untersuchung, Bonitierung und/oder Aufbereitung von Saatgut und eine entsprechende Verwendung zur Herstellung von form- und größenkalibriertem Saatgut mit den Merkmalen der jeweiligen unabhängigen Patentansprüche vor. Bevorzugte Ausgestaltungen sind Gegenstand der Unteransprüche sowie der nachfolgenden Beschreibung.

### Vorteile der Erfindung

Das erfindungsgemäße Klassifizierungsverfahren beinhaltet, die Objekte unter Verwendung wenigstens eines nichtinvasiven Verfahrens zu untersuchen und hierdurch Merkmale der Objekte zu ermitteln. Als wenigstens ein nichtinvasives Verfahren kommt dabei erfindungsgemäß ein Lichtschnittverfahren zum Einsatz, mittels welchem die Objekte dreidimensional vermessen werden, wobei wenigstens ein räumliches Merkmal der Objekte ermittelt wird. Ferner werden zur Klassifizierung Merkmale, die durch das Lichtschnittverfahren an sich oder durch das Lichtschnittverfahren und wenigstens ein weiteres nichtinvasives Verfahren ermittelt wurden, gemeinsam für eine Beschreibung der Objekte verwendet. Als räumliches Merkmal wird eine Raumerstreckung und/oder ein Volumen und/oder eine räumliche Form und/oder eine Oberflächenbeschaffenheit der Objekte ermittelt.

Die vorliegende Erfindung bezieht insbesondere optische, spektroskopische und bildgebende Verfahren als das genannte weitere nichtinvasive Verfahren ein.

Unter optischen Verfahren seien dabei alle Verfahren verstanden, die auf der Wechselwirkung von Licht mit Materie beruhen. Licht bezeichnet hierbei insbesondere den sichtbaren Teil des elektromagnetischen Spektrums im Bereich zwischen 380 nm und 780 nm, jedoch wahlweise auch den Frequenzbereich ab einer Frequenz von 1 THz bis 300 THz. Hierunter fällt also auch das unsichtbare Licht, wie das Infrarotlicht oder das ultraviolette Licht. Optische Untersuchungsmethoden liefern folglich in erster Linie Aufschlüsse über optische Eigenschaften insbesondere der Oberfläche einer untersuchten Probe.

Mittels spektroskopischer Verfahren kann das Energiespektrum eines untersuchten Objekts bestimmt werden. Spektroskopische Verfahren können auf einer optischen Wechselwirkung von Licht mit Materie beruhen, also optische Verfahren darstellen. Spektroskopische Verfahren können jedoch auch die Verwendung andere Bereiche des elektromagnetischen Spektrums, wie Röntgenstrahlung (im Fall der Röntgen(absorptions)spektroskopie), UV-Strahlung (etwa bei der Fluoreszenzspektroskopie), Mikrowellen (Mikrowellenspektroskopie) oder Radiowellen (Kernresonanzspektroskopie), sowie Teilchen, wie Elektronen oder Ionen, umfassen. Dabei kann die Anregung eines untersuchten Objekts mit einer Strahlungsart erfolgen und eine andere Ausstrahlung des untersuchten Objekts in Form einer anderen Strahlungsart untersucht werden. Bei einer Durchstrahlung eines untersuchten Objekts werden Transmissions- bzw. Absorptionsspektren erhalten, die Rückschlüsse hinsichtlich der Wechselwirkung der Materie mit der Strahlung oder den eingestrahlten Teilchen zulassen. Eine spektroskopische Untersuchung einer Probe liefert insbesondere bei Durchdringung der Probe mit der verwendeten Strahlung bzw. den verwendeten Teilchen Aussagen über das betrachtete Spektrum mit Informationen auch aus dem Inneren der Probe.

Bildgebende Verfahren erzeugen aus Messgrößen eines realen Objektes ein Abbild, wobei die Messgröße oder eine daraus abgeleitete Information ortsaufgelöst und über Helligkeitswerte oder Farben kodiert visualisiert wird. Die Messgrößen können ihrerseits aus einer (ortsaufgelösten) optischen und/oder spektroskopischen Untersuchung stammen. Typische bildgebende Verfahren sind photographische Verfahren im sichtbaren oder nichtsichtbaren Licht, zwei- und dreidimensionale Röntgenverfahren sowie die NMR-Bildgebung.

Bei der Untersuchung von Saatgutpartien gemäß Erfindung ist ein hoher Durchsatz erwünscht. Dies bedeutet, dass nicht einzelne Samen nacheinander untersucht oder vermessen werden können. Andernfalls könnte beispielsweise mit einem dreidimensionalen Röntgenverfahren jeder einzelne Samen erfasst und mittels nachgeschalteter Bildverarbeitung dreidimensional dargestellt werden. Ein solches Verfahren lässt sich mit den derzeitigen technischen Möglichkeiten nicht mit der gewünschten Durchsatzgeschwindigkeit realisieren. Die Erfindung bedient sich eines noch zu erläuternden Lichtschnittverfahrens zur dreidimensionalen Erfassung der Objekte in einer Saatgutpartie. Vorteil ist hier, dass eine Fülle einzelner Objekte (Samen) gleichzeitig untersucht werden können. Das Lichtschnittverfahren liefert Aussagen über die dreidimensionale Form des untersuchten Objekts. Die Klassifizierung eines Objekts kann nun mittels zwei oder mehr Merkmalen erfolgen, die nur durch das Lichtschnittverfahren gewonnen wurden, wie weiter unten erläutert wird, oder aber in einer besonders vorteilhaften Ausgestaltung über zwei oder mehr Merkmale, die zum einen aus dem Lichtschnittverfahren stammen und zum anderen aus einem weiteren nichtinvasiven Verfahren. Insbesondere können durch ein solches weiteres nichtinvasives Verfahren Aussagen über die innere und/oder äußere Beschaffenheit des Objekts, im Folgenden "anatomische und/oder morphologische Merkmale", getroffen werden. Voraussetzung für die Erfassung anatomischer Merkmale ist, dass die bei diesem Verfahren eingesetzte Strahlung das Objekt wenigstens zum Teil durchdringt. In anderen Fällen, in denen die Wechselwirkung auf die Oberfläche oder bestimmte Oberflächenschichten des Objekts beschränkt ist, können Aussagen über morphologische Eigenschaften getroffen werden. Auf diese Weise kann die Erfindung Aussagen über die dreidimensionale Gestalt sowie über anatomische und/oder morphologische Merkmale von mehreren, gleichzeitig untersuchten Objekten treffen.

Optische Verfahren zur Vermessung dreidimensionaler Strukturen basieren meist auf dem Triangulations- oder dem Stereoprinzip. Ferner können, insbesondere zur Messung von Mikrostrukturen von Oberflächen, interferometrische Messverfahren verwendet werden.

Bei einfachen Triangulationsverfahren wird ein Lichtpunkt auf die Oberfläche eines zu vermessenden Objektes projiziert und aus einer zur Beleuchtungsrichtung unterschiedlichen Richtung (also unter einem Triangulationswinkel) beobachtet. Die Koordinaten des beleuchteten Punktes können dann aus der räumlichen Orientierung des Projektionsstrahls und dem Triangulationswinkel ermittelt werden. Einzelpunkt-Triangulationsverfahren sind genau und eindeutig, aufgrund der punktförmigen Oberflächenabtastung jedoch langsam.

Weiterentwickelte, auf der Triangulation beruhende Verfahren, die mit besonderem Vorteil im Rahmen der Erfindung zum Einsatz kommen können, sind die Lichtschnitttechnik und die Streifenprojektion.

Bei Lichtschnittverfahren wird anstatt eines einzelnen Punktes eine Linie auf die Oberfläche des zu vermessenden Gegenstandes projiziert. Diese Linie wird, wie in den Einzelpunkt-Triangulationsverfahren, aus wenigstens einer von der Beleuchtungsrichtung abweichenden Richtung mit einer elektronischen Kamera beobachtet, wobei jede Änderung der Oberflächengestalt zu einer definierten Auslenkung im Kamerabild führt. Die Raumkoordinaten der beleuchteten Punkte (Höhenprofil) werden in gleicher Weise wie oben erwähnt ermittelt. Aufgrund der linienförmigen Abtastung ergeben sich deutliche Geschwindigkeitsvorteile.

Beim hiermit eng verwandten Laserlichtschnitt-Triangulationsverfahren, das ebenfalls zu den Lichtschnittverfahren gezählt wird, wird zur Beleuchtung des Objektes ein Laserstrahl, der über eine Linienoptik auf die Oberfläche des zu vermessenden Objektes abgebildet wird, verwendet. Gegenüber der normalen Lichtschnitttechnik ergeben sich aufgrund der geringen lateralen Ausdehnung der Laser-Lichtlinie Präzisionsvorteile. Insbesondere können durch die Laser-Lichtschnitttechnik feine Oberflächenstrukturen bzw. -rauhigkeiten erfasst und, wie unten erläutert, anhand dieser entsprechend Zielsaatgut einer bestimmten Rauhigkeit von Fremdsaatgut oder Besatz mit einer abweichenden Rauigkeit unterschieden werden. Dies kann besonders vorteilhaft zur Unterscheidung von Zuckerrübensaatgut und Getreidesaatgut in derselben Charge ausgenutzt werden.

Bei der Streifenprojektion, die ebenfalls zu den Lichtschnittverfahren zählen soll, handelt es sich um eine Weiterentwicklung der Lichtschnitttechnik, bei der mehrere Linien gleichzeitig auf die Oberfläche des Messobjekts projiziert werden. Die Intensität dieser Linien variiert periodisch in lateraler Richtung und macht die einzelnen Linien für die Beobachtungskamera unterscheidbar.

Eine weitere Gruppe optischer Verfahren, die vorteilhafterweise in Kombination mit der Lichtschnitttechnik verwendet werden können, stellen z.B. binokulare Stereoverfahren dar. Binokulare Stereoverfahren beruhen darauf, dass zwei Ansichten eines Gegenstandes, die unter verschiedenen Blickwinkeln aufgenommen wurden, Rückschlüsse über deren dreidimensionale Gestalt zulassen. Mit Hilfe von Softwarealgorithmen werden Objektmerkmale in den beiden Aufnahmen durch Korrespondenzanalyse identifiziert. Die unterschiedliche Lage dieses Merkmals in den beiden Bildern stellt ein Maß für die Tiefe des Merkmals im dreidimensionalen Raum dar. Das binokulare Stereoprinzip kann von zwei Ansichten auf mehrere Ansichten erweitert werden, wodurch genauere Informationen erhalten werden können und die Korrespondenzanalyse zuverlässiger wird.

Auch photometrische Stereoverfahren sind vorteilhafterweise in Kombination mit Lichtschnittverfahren einsetzbar. Sie nutzen unterschiedliche Beleuchtungsbedingungen, um die Form von Gegenständen zu ermitteln. Anders als bei binokularen Stereoverfahren bleibt der Blickwinkel dabei fest. Aus den Helligkeiten unter den einzelnen Beleuchtungsrichtungen kann auf die Neigung der Objektoberfläche geschlossen werden. Hierbei wird also nicht die räumliche Tiefe, sondern deren mathematische Ableitung gemessen. Photometrische Stereoverfahren sind besonders gut geeignet, lokale Objektstrukturen (also beispielsweise Oberflächenmerkmale) zu bestimmen, globale Strukturmessungen sind allerdings häufig fehlerbehaftet.

Ein erfindungsgemäßes Verfahren zur Klassifizierung in Saatgutpartien enthaltener Objekte beinhaltet daher, wie erwähnt, die Verwendung eines Lichtschnittverfahrens. Der Vorteil besteht dabei darin, dass die Messung berührungslos und damit ohne mechanische Beeinflussung des Objekts, also nichtinvasiv, vorgenommen werden kann. Ferner kann eine große Anzahl von Gegenstandspunkten gleichzeitig erfasst werden, was zu einer Verkürzung der Messzeit führt und ermöglicht, mehrere in einem Saatgutstrom enthaltene Objekte gleichzeitig zu Klassifizierungszwecken zu erfassen.

Im Gegensatz zu den zuvor genannten Untersuchungsverfahren des Standes der Technik müssen die untersuchten Objekte daher nicht einzeln untersucht werden, sondern können mit hohem Durchsatz nebeneinander, z.B. auf einem Förderband, untersucht werden.

Erfindungsgemäß werden mehrere Merkmale der Objekte durch ein oder mehrere entsprechende Verfahren ermittelt und gemeinsam für eine Beschreibung und nachfolgende Klassifizierung verwendet. Hierbei kann eine sequentiell-kaskadierende Einordnung der Objekte (also beispielsweise zunächst nach Größe, nachfolgend nach Oberflächenbeschaffenheit, anschließend nach morphologischen Merkmalen usw.) vorgenommen werden oder eine Eingruppierung von Individuen aus einer Grundgesamtheit anhand bestimmter Merkmalskombinationen in bestimmte Klassen erfolgen. Vorteilhafterweise erfolgt eine Beschreibung von Individuen anhand mehrerer Merkmale gleichzeitig. Die Klassifikationsmerkmale und die Merkmalskombinationen können dabei einem lernenden System antrainiert und auf Grundlage der jeweils erzielten Ergebnisse (beispielsweise eines Reinheits- und Wirkungsgrads) optimiert werden.

Wie zuvor erläutert, werden durch das Lichtschnittverfahren geometrische Eigenschaften, also eine Raumerstreckung und/oder ein Volumen der Objekte rasch und sicher erfasst. Die ermittelten geometrischen Eigenschaften können anschließend miteinander in Beziehung gesetzt und zur Klassifikation der untersuchten Objekte verwendet werden. Beispielsweise kann bei der Untersuchung rundlichen Saatguts, wie unten ausführlich erläutert, ein Objekt mit einem großen Längen-Breiten-Verhältnis als sogenannter Besatz klassifiziert werden, der aus einer entsprechenden Saatgutpartie auszusondern ist.

Ein derartiges Verfahren kann mit besonderem Vorteil unter Verwendung von Schwellwerten ablaufen, wobei bestimmte Sollkriterien für bestimmte Klassifikationsklassen definiert werden können. Beispielsweise weist Saatgut für eine problemlose maschinelle Ausbringbarkeit idealerweise kugelförmige Gestalt auf. Saatgut, das eine definierte Abweichung von der Kugelgestalt überschreitet, kann daher ebenfalls aussortiert werden. Saatgut kann ferner aufgrund von Formparametern in Formklassen unterteilt werden. Eine derartige Sortierung oder Aufbereitung aufgrund von Formparametern wird im Rahmen dieser Anmeldung als "Formkalibration" bezeichnet. Sie kann insbesondere mit einer Größenkalibration, die ebenfalls vorteilhafterweise unter Verwendung der Lichtschnitttechnik erfolgt, kombiniert werden. Hierdurch können durch Form- und Größenmerkmale exakt beschriebene Saatgutfraktionen erzeugt werden, die definierte mechanische Ausbringungseigenschaften aufweisen.

Herkömmlicherweise wird Zuckerrübensaatgut, wie oben erläutert, pilliert, um seine Ausbringbarkeit zu verbessern. Mechanische Sämaschinen für Zuckerrübensaatgut weisen üblicherweise Ausbringungseinrichtungen mit Kavitäten auf, in denen jeweils ein Knäuel bzw. Same aufgenommen werden kann. Durch die Pillierung soll erreicht werden, dass tatsächlich jeweils nur ein Knäuel in eine entsprechende Kavität gelangt und damit einzeln ausgebracht wird. Durch die Pillierung wird jedoch gleichzeitig das Volumen des Saatguts beträchtlich vergrößert (etwa verdreifacht), was zu einer häufig erforderlichen Wiederbefüllung der Sämaschinen und damit zu einer unwirtschaftlicheren Ausbringung führt. Dem Fachmann ist zudem bekannt, dass pilliertes Zuckerrübensaatgut schlechtere Aufwuchseigenschaften aufweist. So schirmt die verwendete Hüllmasse bei Trockenheit Wasser vom Samen ab, welches dem Samen dann nicht mehr zur Verfügung steht. Andererseits nimmt die Hüllmasse bei großer Feuchtigkeit übermäßig viel Wasser auf ("saugt sich voll") und erstickt daher häufig den Samen.

Kann daher unter Verwendung des erfindungsgemäßen Verfahrens Saatgut "idealer" dreidimensionaler Form erzeugt werden, kann dieses in entsprechend angepassten Sämaschinen ohne Pillierung ausgebracht werden. Durch den Verzicht auf die Pillierung des Saatguts werden dessen Ausbringbarkeit, aber auch dessen Feldaufgangseigenschaften positiv beeinflusst. Die Erfindung umfasst daher auch die Verwendung eines zuvor erläuterten Klassifizierungsverfahrens zur Herstellung von nichtpilliertem, im Rahmen der oben erläuterten Definition form- und größenkalibriertem Saatgut, insbesondere Zuckerrübensaatgut.

Durch das erfindungsgemäße Verfahren wird also eine sehr rasche, zuverlässige und nichtinvasive Vermessung von Saatgutkomponenten, beispielsweise von in dem Saatgut enthaltenen Samen oder Früchten, von Blattabschnitten, Erdresten, Unkrautsamen und dergleichen ermöglicht. Im Rahmen des erfindungsgemäßen Verfahrens können Samen oder Früchte beispielsweise über geeignete Vereinzelungsgeräte in Einzelkornlage auf ein Transportband aufgegeben und zur Inspektion von Form und Größe unter einem Strichlaser und einer oder mehreren Höhenbildkameras entlang geführt werden. Über die Abweichungen der Lichtpunkte von der Nulllinie des Bandes werden Höhenprofile der einzelnen Samen erstellt und durch Auswertung der Profile verschiedene geometrische Parameter (Form-, Oberflächen- und Größenparameter) gemessen. Mit Hilfe dieser gemessenen Parameter können Samen oder Früchte von Blattresten, Stoppeln, Erdklumpen und Steinen sowie anderen Fremdkörpern unterschieden und das Saatgut entsprechend seiner tatsächlichen Ausdehnung in allen drei Dimensionen erkannt werden.

Als wenigstens ein räumliches Merkmal kann auch eine räumliche Form und/oder eine Oberflächenbeschaffenheit der Objekte ermittelt werden. Die zuvor erläuterten räumlichen Merkmale sind also nicht auf eine Längen- und Breitenerstreckung und ein entsprechende Volumen beschränkt, sondern beinhalten auch beispielsweise Kanten- und/oder Oberflächeneigenschaften wie Rauhigkeit und geometrische Form. So weist bigermes Zuckerrübensaatgut beispielsweise eine in der Draufsicht im Wesentlichen rechteckige Form und eine ausgeprägte Kantigkeit auf, wohingegen Weizenkörner (mit im Übrigen ähnlichen Größenmerkmalen) im Längsschnitt oval ausgebildet sind und nur geringe Kantigkeit besitzen. Auch durch eine Untersuchung der Oberflächenstruktur kann beispielsweise Zuckerrübensaatgut (mit ausgeprägter Rauhigkeit) von Unkrautsamen (mit glatterer Oberfläche) unterschieden werden.

Mit besonderem Vorteil ist - wie erläutert - dem genannten Lichtschnittverfahren wenigstens ein weiteres nichtinvasives Verfahren nachgeschaltet. Hierbei kann vorteilhafterweise ein bildgebendes Verfahren, insbesondere Ultraschall-, Röntgen- oder Magnetresonanzbildgebung, zum Einsatz kommen. Die genannten optischen oder bildgebenden Verfahren beinhalten vorteilhafterweise auch eine Bestimmung der Farbe. Hierdurch kann z.B. Pilzbefall zuverlässig erkannt oder eine Differenzierung von Objekten mit im Übrigen identischen Größen- und Formparametern vorgenommen werden.

Durch ein derartiges bildgebendes Verfahren können beispielsweise zweidimensionale Röntgenschnittbilder erhalten werden, die eine Unterscheidung zwischen Samen und anderen Objekten, wie Steinen oder Erdklumpen, zulassen. Werden Objekte als Samen erkannt, können die zugehörigen (Röntgenschnitt-) Bilder einem Bildverarbeitungsverfahren unterworfen werden. Im Rahmen dieses Bildverarbeitungsverfahrens kann beispielsweise eine Segmentierung der Bilddaten erfolgen, das heißt eine Zuordnung von Bildbereichen bzw. Bereichen von Untersuchungsdaten zu Bereichen eines untersuchten Objekts. Hierdurch können morphologische und/oder anatomische Merkmale der Objekte, beispielsweise von Samen oder Knäueln, ermittelt und zu einer Beschreibung einer Saatgutqualität herangezogen werden. So ist die Füllung der Frucht mit Samen und Nährgewebe ausschlaggebend für dessen Feldaufgangsverhalten. Werden also Leerräume einer gewissen Größe innerhalb einer Frucht detektiert, ist diese gegebenenfalls auszusortieren.

Mit besonderem Vorteil kann auch ein spektroskopisches Verfahren zum Einsatz kommen, mittels welchem wenigstens ein spektroskopisches Merkmal der Objekte ermittelt wird. Derartige spektroskopische Verfahren, wie beispielsweise Kernresonanz-, Elektronenspinresonanz-, Mikrowellen-, Schwingungs-, Infrarot-, RAMAN-, UV-VIS-, Fluoreszenz-, Atom-, Röntgen-, und/oder Gammastrahlenspektroskopie sind zur Untersuchung von Materialeigenschaften (Stoffzusammensetzung, Bestimmung von Konzentrationen) prinzipiell bekannt. Mit besonderem Vorteil können derartige Verfahren zur Ermittlung eines oder einer Verteilung von Absorptionsmerkmalen eines Objekts verwendet werden. Im Gegensatz zu den zuvor erläuterten bildgebenden Verfahren sind spektroskopische Verfahren sehr schnell und daher für hohen Saatgutdurchsatz geeignet. Auf umfangreiche Bildverarbeitungsverfahren kann verzichtet werden. Die gemessenen Absorptionsmerkmale können beispielsweise gemeinsam mit den geometrischen Eigenschaften für eine Beschreibung der Objekte verwendet werden.

Beispielsweise kann bei Objekten identischer Größe, identischer dreidimensionaler Ausdehnung und ähnlicher visueller Oberflächenbeschaffenheit über eine Bestimmung der Dichte oder einer spektroskopischen Resonanz oder Durchlässigkeit eine klare Trennung zwischen Erdklümpchen oder Steinen und Saatgut vorgenommen werden, was im Rahmen herkömmlicher Verfahren, insbesondere im Fall von Zuckerrübensaatgut, nicht möglich ist. Ferner wird auch hierdurch ermöglicht, vollständig gefüllte Samen oder Früchte (also Samen oder Früchte mit ausreichend ausgebildetem Nährgewebe) von Samen mit Leerräumen zu unterscheiden. Das vorgestellte Verfahren ermöglicht damit den Ersatz oder die Unterstützung von bisher verwendeten schwerkraftbasierten Verfahren.

Insbesondere eine Kombination spektroskopischer Merkmale mit Formmerkmalen lässt daher eindeutige Aussagen zur Natur der untersuchten Objekte zu, wo ein einzelnes Untersuchungsverfahren zweideutige Ergebnisse liefert. Wie erläutert, betrifft dies beispielsweise Erdklümpchen und Saatgut, die möglicherweise identische geometrische Formen aufweisen, in ihrem Transmissionsverhalten jedoch abweichen.

Durch die genannten Verfahren kann, wie mehrfach erläutert, ermittelt werden, welcher Befüllungsgrad einer Frucht mit Keimlings- bzw. Embryogewebe vorliegt und dieser Füllungsgrad dann mit einem Volumen und/oder einer Ausdehnung der Frucht in Beziehung gesetzt werden. Durch dieses und die weiteren zuvor erläuterten Verfahren kann also bei Kenntnis einer dreidimensionalen Form (Volumen, Ausdehnung, Geometrie) aufgrund von Informationen über den jeweiligen Füllungsgrad der Frucht eine besonders hohe Homogenität in dem gewonnenen Saatgut, das heißt innerhalb einer Kalibrierungsstufe, erzielt werden. Diese lässt einen besonders einheitlichen und homogenen Aufwuchs auf dem Feld erwarten.

Eine weitere vorteilhafte Ausgestaltung beinhaltet wenigstens eine weitere nichtinvasive Untersuchung in Form eines optischen Verfahrens, mittels welchem wenigstens ein optisches Merkmal der Objekte ermittelt wird. Bei bestimmten Fragestellungen kann, wie auch unten näher erläutert, bereits eine zusätzliche optische Beurteilung zur Klassifizierung von Saatgut verwendet werden. So kann, was bei Zuckerrübensaatgut nicht ohne weiteres der Fall ist, durch die optische Inspektion Weizensaatgut von vorhandenen Erdklumpen unterschieden werden. Optische Merkmale können mit besonderem Vorteil eine Farbe und/oder eine Fluoreszenzeigenschaft beinhalten.

Es sei zu verstehen gegeben, dass durch sämtliche vorgenannten Verfahren die Objekte wenigstens teilweise dreidimensional erfasst und/oder vermessen werden können. In diesem Zusammenhang kann beispielsweise ein Bildgebungsverfahren in zwei Schnittebenen durchgeführt werden, um zuverlässigere Aussagen zu anatomischen und/oder morphologischen Eigenschaften der Objekte zu treffen; durch spektroskopische Verfahren kann ein Absorptionsprofil durch wenigstens zwei Ebenen bzw. Schnittlinien der Objekte bestimmt werden. Die räumlichen Eigenschaften der Objekte werden ebenfalls wenigstens teilweise dreidimensional bestimmt. Hierbei versteht sich, dass Objekte, die mittels eines Lichtschnittverfahrens auf einer Unterlage untersucht werden, nicht vollständig geometrisch erfasst werden können, da der auf der Transporteinrichtung aufliegende Teil des Objekts durch den Laserstrahl- und/oder die Kamera nicht erreicht wird. In diesem Zusammenhang hat es sich jedoch als zweckmäßig erwiesen, lediglich "Höhendaten" der auf der Unterlage aufliegenden Objekte zu bestimmen.

Mit besonderem Vorteil kann durch das erfindungsgemäße Verfahren eine Klassifizierung der Objekte in den Saatgutpartien als Erdpartikel, Steine, Stengel, Blattreste, Blütenreste, Unkrautsamen und/oder Samen oder Früchte wenigstens einer Form- und/oder Größenklasse und/oder mit wenigstens einer morphologischen Eigenschaft erfolgen. Fremdkörper oder unerwünschte Samen oder Früchte können aus dem Saatgut aussortiert und verworfen werden.

Das Verfahren ist dabei in besonderer Weise auch dafür geeignet, die Samen oder Früchte selbst zu klassifizieren. So kann zwischen bikarp-monogermen, bikarp-bigermen und monokarp-monogermen Früchten unterschieden werden. Bikarpmonogermes Saatgut, das zwar zwei Kammern aufweist, von denen jedoch nur eine mit einem Samen besetzt ist, lässt sich herkömmlicherweise nicht oder nur schwer von bikarp-bigermen Samen unterscheiden. Da Zuckerrübensaatgut, wie erwähnt, idealerweise nur eine Rübe pro ausgebrachtem Knäuel erzeugen soll, sind bigerme Knäuel auszusortieren. Die bikarp-monogermen Knäuel können jedoch bei sicherem Erkennen derselben im Saatgut belassen werden, was den Ausnutzungsgrad der Saatgutrohware erhöht.

Es lässt sich zusammenfassen, dass die vorliegende Erfindung durch eine exakte Vermessung und Sortierung in enge Klassen die Bereitstellung von "Hightech-Saatgut" erlaubt, bei dem auf eine Pillierung verzichtet werden kann. Der Verzicht auf Pillierung bringt den Vorteil der bereits erwähnten enormen Volumen- und Gewichtsreduzierung des auszubringenden Saatguts, des besseren Keimungsverhaltens sowohl bei Wasserüberschuss als auch bei Wassermangel und nicht zuletzt einer Reduktion der Kosten. Die Erfindung bringt beste Ergebnisse bei einer Kombination von zwei Sensoriken, also bei Korrelation von (mindestens) zwei Merkmalsarten, unter die räumliche, morphologische, spektroskopische und optische Merkmale fallen, und die eine Untersuchung von Oberflächenmerkmalen einerseits und der inneren Morphologie andererseits beinhalten. Schließlich kann die Erfindung zur Einsparung herkömmlicher Sortiergeräte mit ihren entsprechenden Sortierverfahren (Vibration, Gravitation, Sieblöcher etc.) mit den erwähnten Nachteilen führen. Es sei noch darauf hingewiesen, dass erfindungsgemäß auch mehrere Fraktionen von Samen herstellbar sind, wobei jede Fraktion Samen gleicher Merkmale (geometrisch, anatomisch, morphologisch und/oder optisch) aufweist.

Das erfindungsgemäße Verfahren kann insbesondere im Rahmen von Saatgutreinheitsanalysen (Bonitur) eingesetzt werden. Hierbei können "Schlechtfraktionen" ausgeschleust werden und, ebenso wie die erhaltenen "Gutfraktionen" einer visuellen Nachbonitur und einer entsprechenden statistischen Auswertung unterzogen werden.

In Tabelle 1 ist eine exemplarische Zusammensetzung einer verunreinigten Zuckerrüben-Rohsaatgutpartie in % und Masseanteilen angegeben. Ziel der Saatgutreinigung ist ein möglichst hoher Gehalt an Zuckerrübenknäueln ohne Besatz (also unerwünschten Bestandteilen).

Wie aus Tabelle 2 ersichtlich, wird durch die erfindungsgemäße Aufreinigung ein Reinheitsgrad von 99,43 mit minimalen Mengen an Besatz in der Gutfraktion erhalten. Der prozentuale Anteil an Knäueln in der Schlechtfraktion (Tabelle 3) liegt bei 72,2 %, hierbei handelt es sich jedoch nur um einen Gewichtsanteil von 7% jener in der Gutfraktion. Das erfindungsgemäße Verfahren erlaubt in der täglichen Praxis eine Sortierung von ca. 7.000.000 Partikeln (entsprechen ca. 70 kg Saatgut) pro Stunde.

**Tabelle 1. Exemplarische Zusammensetzung einer verunreinigten Zuckerrüben-Rohsaatgutpartie**

| **Art** | **Häufigkeit %** | **g** |
|---|---|---|
| Knäule Rohware | 88,75 | 2662 |
| Stoppeln | 8,00 | 240 |
| Stoppelknäule | 0,15 | 4,5 |
| Blätter | 1,50 | 45 |
| Blütenreste | 1,25 | 37,5 |
| Unkraut | 0,23 | 6,9 |
| Klumpen | 1,09 | 32,7 |

**Tabelle 3. Zusammensetzung der "Gutfraktion" nach erfindungsgemäßer Aufreinigung der Saatgutpartie**

| **Art** | **Häufigkeit %** | **g** |
|---|---|---|
| Knäule Rohware | 99,43 | 2485 |
| Stoppeln | 0,03 | 0,75 |
| Stoppelknäule | 0,05 | 1,25 |
| Blätter | 0,10 | 2,50 |
| Blütenreste | 0,08 | 2,00 |
| Unkraut | 0,05 | 1,25 |
| Klumpen | 0,24 | 6,00 |

**Tabelle 3. Zusammensetzung der "Schlechtfraktion" nach erfindungsgemäßer Aufreinigung der Saatgutpartie**

| **Art** | **Häufigkeit %** | **g** |
|---|---|---|
| Knäule Rohware | 72,2 | 177 |
| Stoppeln | 22,14 | 239 |
| Stoppelknäule | 0,38 | 3,3 |
| Blätter | 1,53 | 42,5 |
| Blütenreste | 2,40 | 35,5 |
| Unkraut | 0,63 | 5,5 |
| Klumpen | 0,73 | 26,7 |

Zu Merkmalen und Vorteilen der erfindungsgemäß ebenfalls vorgesehenen Verfahren zur Untersuchung und/oder Aufbereitung von Saatgutpartien sei auf die vorstehenden Erläuterungen ausdrücklich verwiesen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

- Figur 1: zeigt eine schematische Darstellung einer Vorrichtung gemäß einer besonders bevorzugten Ausführungsform der Erfindung.
- Figur 2: zeigt im Rahmen einer besonders bevorzugten Ausführungsform des erfindungsgemäßen Verfahrens erhaltene Oberflächen-Bilddaten.
- Figur 3: zeigt im Rahmen einer besonders bevorzugten Ausführungsform des erfindungsgemäßen Verfahrens erhaltene Röntgen-Durchstrahlungsdaten.
- Figur 4: zeigt im Rahmen einer besonders bevorzugten Ausführungsform des erfindungsgemäßen Verfahrens erhaltene Röntgen-Schnittbilddaten und entsprechend zugeordnete morphologische Merkmale.
- Figur 5: zeigt im Rahmen einer besonders bevorzugten Ausführungsform des erfindungsgemäßen Verfahrens erhaltene Röntgen-Schnittbilddaten eines Saatgutgemischs mit Besatz.
- Figur 6: zeigt im Rahmen einer besonders bevorzugten Ausführungsform des erfindungsgemäßen Verfahrens erhaltene Kernresonanzdaten von Bestandteilen eines Saatgutgemischs mit Besatz.
- Figur 7: zeigt in Form eines Ablaufplans ein gemäß einer besonders bevorzugten Ausführungsform der Erfindung ablaufendes Verfahren.

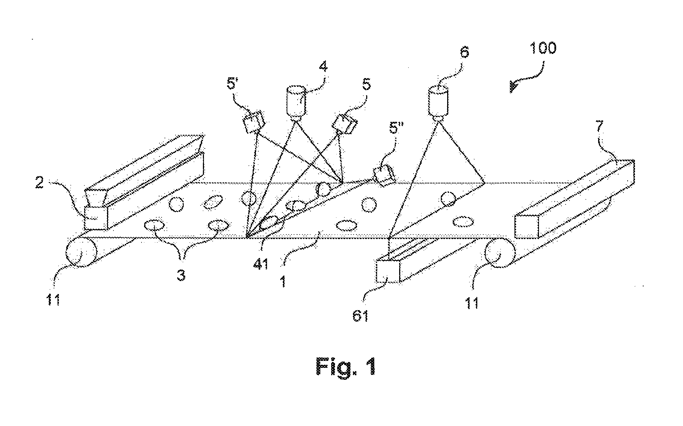

In Figur 1 ist eine Vorrichtung zur Klassifikation, Untersuchung und/oder Aufbereitung von Saatgut dargestellt und insgesamt mit 100 bezeichnet.

Die Vorrichtung 100 weist eine Transporteinrichtung 1, beispielsweise ein mit entsprechenden Walzen 11 versehenes Förderband, auf. Beispielsweise über eine Vereinzelungseinrichtung 2 werden Objekte 3 aus in die Vereinzelungseinrichtung 2 eingebrachten Saatgutpartien in Einzelschichtlage auf die Fördereinrichtung 1 aufgebracht. Unter Einzelschichtlage sei hierbei verstanden, dass die Objekte 3 nebeneinander liegen und einander vorzugsweise nicht bzw. nur in geringen Umfang überlagern.

Die Vorrichtung 100 weist eine Lichtquelle 4, beispielsweise einen Strichlaser auf. Die Vorrichtung 100 ist zur Verwendung der Lichtschnitttechnik eingerichtet. Wie zuvor erläutert, kann das erfindungsgemäße Verfahren jedoch auch beispielsweise unter Verwendung stereometrischer und/oder interferometrischer Techniken ablaufen. Ein Laserlichtschnitt-Verfahren wird unten beispielhaft dargestellt und kurz erläutert.

Die Lichtquelle 4, die, wie erwähnt, beispielsweise zur Erzeugung einer Laserlinie 41 eingerichtet ist, ist auf die Fördereinrichtung 1 gerichtet und projiziert eine Laserlinie im Wesentlichen quer zur Förderrichtung der Fördereinrichtung. Passieren Objekte 3 die Laserlinie 41, kann bei seitlicher Beobachtung der Laserlinie 41 eine Auslenkung dieser Linie beobachtet werden. Die Auslenkung der Laserlichtlinie kann beispielsweise mittels geeigneter Beobachtungskameras 5, 5', 5" beobachtet werden, welche unter Einschluss geeigneter Triangulationswinkel auf die Laserlichtlinie ausgerichtet sind. Im Allgemeinen ist in derartigen Lichtschnittverfahren die Verwendung zumindest einer Kamera erforderlich. Durch die Verwendung von zwei oder mehreren Kameras 5, 5', 5", die in unterschiedlichen Triangulationswinkeln angebracht sind, erhöht sich jedoch die Genauigkeit.

Die Kameras 5, 5' und 5" sind mit einer Auswerteeinrichtung (nicht dargestellt), beispielsweise einem Hochleistungscomputer, verbunden. In der Verarbeitungseinrichtung werden die durch die Kameras 5, 5' und 5" jeweils ermittelten Einzel- oder Teilbilder zu Datensätzen zusammengefügt und hieraus geometrische Daten eines jeden Objekts 3 berechnet. Diese Daten können auch zu dreidimensionalen Darstellungen der beobachteten Objekte 3 verarbeitet werden. Wenigstens eine der Kameras 5, 5' und 5" kann auch als visuelle Beobachtungskamera, beispielsweise als Farbkamera ausgebildet sein, so dass beispielsweise mittels einer oder mehrerer als Messkameras ausgebildeter Kameras 5, 5', 5" eine dreidimensionale Darstellung der Objekte 3 erhalten werden kann und die Farbkamera zusätzliche Farbinformationen zu den dreidimensionalen Objekten 3 liefert.

In besonderen Anwendungsfällen, beispielsweise bei der Klassifizierung von Getreidesaatgut, kann, wie erwähnt, eine unterschiedliche Farbinformation der Objekte 3 zur Klassifizierung der Objekte 3 als Saatgut (Getreidekörner) oder Besatz (beispielsweise Erdklumpen) verwendet werden.

Aufgrund der dreidimensionalen Datenerfassung der erfindungsgemäßen Einrichtung spielt die Ausrichtung der Objekte 3 auf der Transporteinrichtung keine Rolle mehr, da stets eine dreidimensionale Raumerstreckung der Objekte erfasst wird. Dies stellt einen signifikanten Vorteil gegenüber herkömmlichen Saatgutbeurteilungsverfahren, wie beispielsweise auch aus der DD 255 097 A1 bekannt, dar.

Neben einer Einzellichtquelle 4 können selbstverständlich auch mehrere Lichtquellen mit unterschiedlichen Lichteigenschaften verwendet werden. Beispielsweise kann im Rahmen von fotometrischen Stereoverfahren eine Beleuchtung aus zwei unterschiedlichen Richtungen erfolgen, und durch eine oder mehrere der Kameras 5, 5' und 5" eine Bestimmung von Oberflächenneigungen vorgenommen werden. Die Bestimmung von Fluoreszenzeigenschaften von Saatgut zur Ermittlung von Qualitätsmerkmalen ist beispielsweise aus der EP 1 076 822 A1 bekannt. Lichtquellen, die bestimmte Fluoreszenzeigenschaften des Saatguts anregen, können daher ebenfalls verwendet werden.

Falls zweckmäßig, können auch im Rahmen des erfindungsgemäßen Verfahrens mehrere Lichtquellen 4 verwendet werden, welche abwechselnd stroboskopartig angesteuert werden, sodass eine alternierende Beobachtung unter unterschiedlichen Beleuchtungsbedingungen ermöglicht wird. Neben optischen Kameras 5, 5' und 5" können Fluoreszenzkameras und dergleichen, oder, allgemein gesprochen, Abbildungseinrichtungen für optische Reflektionseigenschaften der untersuchten Objekte 3 verwendet werden.

Die Vorrichtung 100 kann auch für eine stereoskopische Messung eingerichtet sein, wobei, wie oben erläutert, zwei Kameras 5, 5', 5" aus unterschiedlichen Blickwinkeln oder zwei entsprechend ausgerichtete Lichtquellen 4 zum Einsatz kommen können.

Nach dem Passieren der durch die Beleuchtungseinrichtung 4 beispielsweise erzeugten Laserlichtlinie 41 passieren die Objekte 3 eine weitere nicht invasive Messeinrichtung, hier als Röntgenquelle 6 und gegenüberliegende Röntgendetektionseinrichtung 61 dargestellt. Durch die Röntgenquelle 6 und die gegenüberliegende Detektionseinrichtung 61 können wahlweise entweder Röntgenabsorptionseigenschaften (also "Grauwerte" eines entsprechenden Objekts) bestimmt oder zweidimensionale Bilddaten des Objektes erhalten und entsprechend ausgewertet werden.

Vorzugsweise ist die Röntgendetektionseinrichtung 61 ebenfalls mit der zuvor erwähnten, nicht dargestellten Auswerteeinrichtung verbunden. Die erfindungsgemäße Auswertung beinhaltet insbesondere eine Korrelation unterschiedlicher ermittelter Eigenschaften, beispielsweise, wie zuvor erläutert, eine Korrelation einer maximalen Ausdehnung mit einem Volumen und/oder mit einer Röntgenabsorptionseigenschaft und/oder einer Eigenschaft eines durch ein bildgebendes Röntgenverfahren ermittelten morphologischen Merkmals.

Die erfindungsgemäße Vorrichtung 100 kann ferner eine Sortiereinrichtung 7 beinhalten, in der zuvor klassifizierte Objekte 3, beispielsweise durch pneumatische Sortierung, in Fraktionen aufgespalten werden.

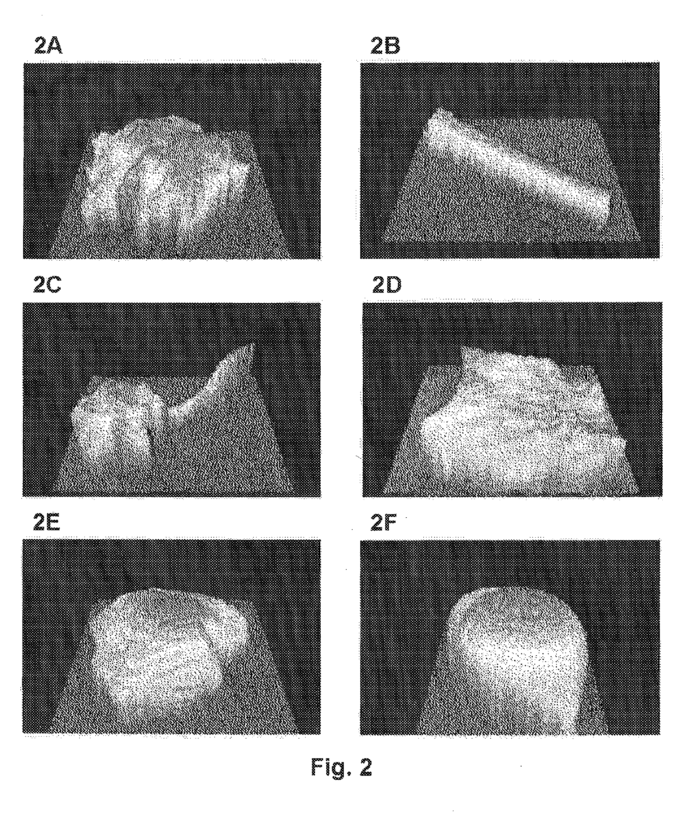

In Figur 2 sind durch ein erfindungsgemäßes Verfahren gemäß einer besonders bevorzugten Ausführungsform erhaltene dreidimensionale Untersuchungsdaten von Objekten in Zuckerrübensaatgut dargestellt. Die Abbildungen sind aus fortlaufend aufgezeichneten Laserlichtschnittlinien, wie in Vorrichtung 100 erzeugbar, rekonstruiert. Naturgemäß werden bei optischer Untersuchung von Objekten auf einer Oberfläche 1 (beispielsweise in einer Vorrichtung 100), wie erläutert, "Höhenbilder" dieser Objekte 3 erhalten. Eine vollständige räumliche Darstellung ist aufgrund der Beobachtung von oben nicht ohne weiteres möglich. Es hat sich jedoch herausgestellt, dass im Rahmen des erfindungsgemäßen Verfahrens eine Höhenbilddarstellung zur Klassifizierung von Objekten in Saatgutpartien ausreichend und zweckmäßig ist. Wie erwähnt, können diese Höhendaten auch aus zwei Beobachtungswinkeln erhalten und entsprechend kombiniert werden.

Figur 2A zeigt ein Zuckerrübenknäuel, das beispielsweise aufgrund seines Flächen-Volumen-Verhältnisses in Kombination mit entsprechenden Rauhigkeitsmerkmalen als solcher klassifiziert werden kann.

In Figur 2B ist ein in Zuckerrübensaatgut vorzufindender und durch das erfindungsgemäße Verfahren als solcher klassifizierter Stoppel dargestellt. Bei derartigen Stoppeln handelt es sich um Blüten- bzw. Fruchstiele, die als Besatz in Zuckerrübensaatgut unerwünscht sind. Stoppeln zeichnen sich im Rahmen des dargestellten Untersuchungsverfahrens durch eine große Längserstreckung bei gleichzeitig geringer seitlicher Erstreckung aus.

In Figur 2C ist ein erfindungsgemäß klassifizierter Stoppelknäuel dargestellt, also ein Knäuel mit anhaftendem Stoppel, welcher in Qualitätssaatgut ebenfalls unerwünscht ist, da er eine schlechtere maschinelle Ausbringbarkeit aufweist. Die Klassifikation erfolgt auf Grundlage einer Kombination der zuvor (siehe Figuren 2A und 2B) erläuterten Merkmale.

In Figur 2D ist ein erfindungsgemäß klassifizierter Blattrest dargestellt, der sich durch eine relativ große Fläche bei gleichzeitig ausgeprägter "Flachheit" auszeichnet.

In Figur 2E ist ein entsprechend klassifizierter Erdklumpen dargestellt. Wie unmittelbar ersichtlich, können möglicherweise rein optisch Erdklumpen und Steine (Figur 2E) nur schwer von den optisch ähnlichen Zuckerrübenknäueln (Figur 2A) unterschieden werden, so dass gegebenenfalls hierzu weitere Verfahren zum Einsatz kommen müssen. Figur 2F zeigt einen Unkrautsamen, der im Vergleich zu dem Zuckerrübenknäuel (Figur 2A) eine deutlich verringerte Rauhigkeit aufweist.

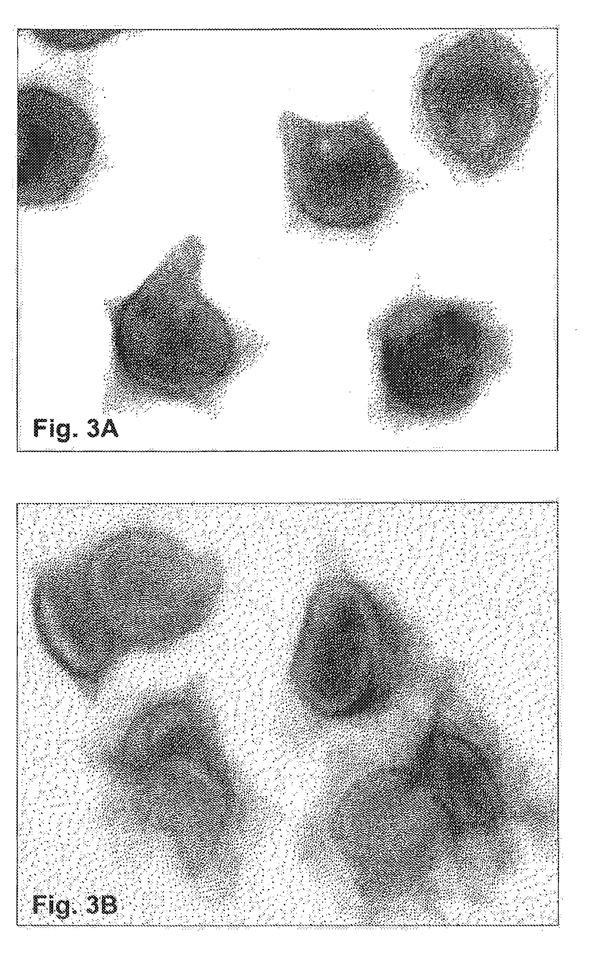

In Figur 3 sind durch 2D-Röntgenbildgebung ermittelte Querschnitte durch Zuckerrübensamen (Durchstrahlungsbilder) übersichtsmäßig dargestellt. Figur 3A zeigt hierbei monokarpe, monogerme Knäuel, die vollständig gefüllt sind. Hiervon lassen sich die in Figur 3B dargestellten bikarpen, bigermen Knäuel (also Knäuel mit zwei gefüllten Samen) im Röntgenbild deutlich unterscheiden.

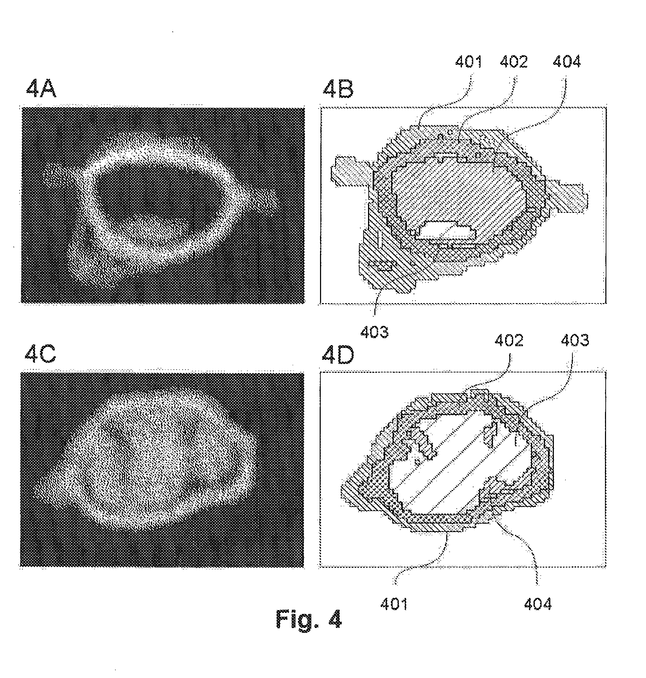

Figur 4 zeigt Detailansichten zweier Zuckerrübenknäuel, wobei in den Teilfiguren 4A und 4C jeweils durch Röntgenbildgebung erhaltene Rohdaten und in den Teilfiguren 4B und 4D jeweils entsprechende, durch ein automatisches Segmentierungsverfahren erhaltene Gewebeinformationen, also morphologische Merkmale, dargestellt sind. Hierbei sind jeweils der weiche Teil der Fruchtschale 401, der harte Teil der Fruchtschale 402, das Samengewebe 403 (Embryo und Endosperm) sowie ein Hohlraum 404 differenzierbar. Die Bestimmung dieser Segmente 401 bis 404 aus den Schnittaufnahmen erfolgt beispielsweise unter Verwendung von Grauwerten und durch Anlernen eines entsprechenden Erkennungssystems.

Bei den in Abbildung 4 jeweils dargestellten Samen sind also Hohlräume 404 innerhalb des Knäuels zu erkennen und durch die Segmentierung entsprechend zugeordenbar. Der Hohlraum 404 füllt dabei bei dem in Teilfiguren 4A und 4B dargestellten Samen den Knäuel nahezu vollständig aus, das Samengewebe 403 ist hingegen kaum zu erkennen. Das Vorliegen des Hohlraums 404 innerhalb eines Knäuels sowie dessen Größe in Bezug auf die Größe des Samengewebes 403 sowie die Größe dieser Merkmale im Verhältnis zu einer durch ein optisches Untersuchungsverfahren ermittelten geometrischen Eigenschaft kann mit besonderem Vorteil für eine Definition von Qualitätsmerkmalen von Knäueln und eine hierauf beruhende Aufbereitung verwendet werden.

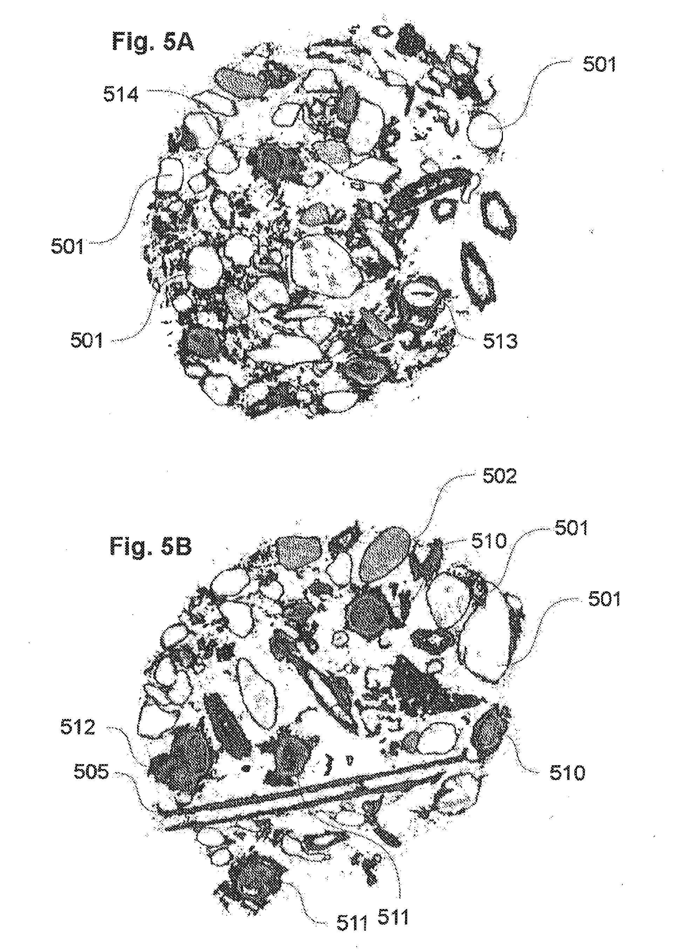

In Figur 5 sind durch 2D-Röntgenbildgebung erhaltene Bilddaten von Rohsaatgutmischungen mit hohem Besatzanteil abgebildet. Der Besatz besteht (unter anderem) aus Steinen und Erdklumpen 501 (aufgrund der Röntgendurchlässigkeit klar von Saatgut 510 bis 513 zu unterscheiden), Getreidesaatgut 502 mit deutlich abweichender Form und unterschiedlicher Röntgendurchlässigkeit und Stengelresten 505.

An Saatgut 510 bis 513 sind (erwünschte) monogerm-monokarpe Knäuel 510 mit vollständiger Füllung der einen vorhandenen Kammer, teilweise gefüllte monogerm-monokarpe Knäuel 511 mit potentiell schlechteren Aufwuchseigenschaften (vgl. Figuren 4A, 4C), auszusortierende bikärpe und bigerme Knäuel 512 und zweikammerige aber leere Knäuel 513 sowie möglicherweise verwendbare zweikammerige, aber monogerme Knäuel 514 (siehe oben) unterscheidbar.

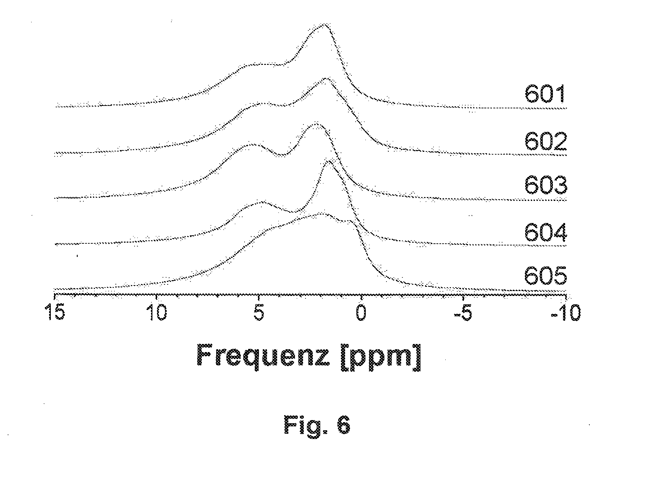

Figur 6 zeigt an unterschiedlichen Komponenten eines Saatgutgemischs erhaltene Magnetresonanzspektren 601 bis 605, die alternativ oder zusätzlich zu den Röntgendaten für die Klassifizierung und Sortierung verwendet werden können.

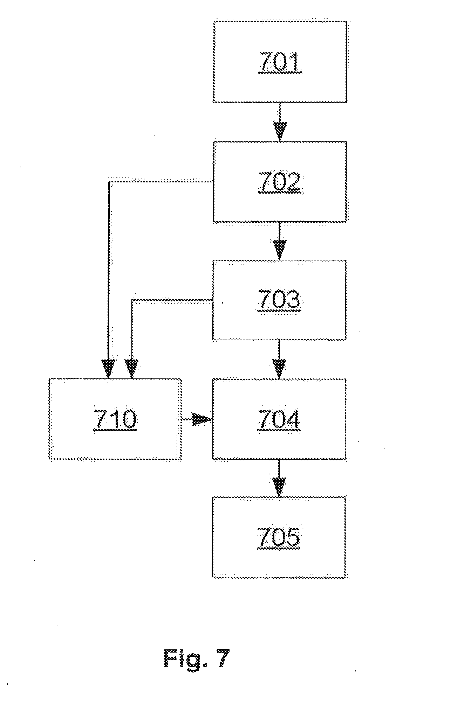

Figur 7 zeigt schematisch ein gemäß einer bevorzugten Ausführungsform ablaufendes Verfahren. In Schritt 701 wird Saatgut bzw. werden in Saatgut enthaltene Objekte einer Untersuchungseinrichtung wie Vorrichtung 100 der Figur 1 zugeführt. Hierbei kann beispielsweise eine Vereinzelungseinrichtung 2 verwendet werden.

In Schritt 702 erfolgt eine erste Untersuchung mittels eines ersten nichtinvasiven Verfahrens, beispielsweise mittels Laserschnittechnik. Die Untersuchungsdaten werden beispielsweise einer Auswerteeinheit 710 zugeführt.

In Schritt 703 erfolgt eine zweite Untersuchung mittels eines zweiten nichtinvasiven Verfahrens, beispielsweise Röntgenbildgebung. Auch die Untersuchungsdaten dieser Untersuchung werden der Auswerteeinheit 710 zugeführt.

In Schritt 704 erfolgt eine Beurteilung des in den Schritten 702 und 703 zweifach untersuchten Objekts und wahlweise eine entsprechende Behandlung, beispielsweise eine Aussortierung, wodurch in Schritt 705 aufbereitetes Saatgut erhalten wird.

## Patentansprüche

1. Verfahren zur Klassifizierung (704) in Saatgutpartien enthaltener Objekte (3), bei dem unter Verwendung wenigstens eines nichtinvasiven Verfahrens (702, 703) Merkmale der Objekte (3) ermittelt werden, **dadurch gekennzeichnet, dass** als wenigstens ein nichtinvasives Verfahren (602, 603) ein Lichtschnittverfahren (702) verwendet wird, mittels welchem die Objekte (3) dreidimensional vermessen werden, wobei als wenigstens ein räumliches Merkmal der Objekte (3) eine Raumerstreckung und/oder ein Volumen und/oder eine räumliche Form und/oder eine Oberflächenbeschaffenheit der Objekte (3) ermittelt wird, und dadurch, dass zur Klassifizierung Merkmale, die durch das Laserlichtschnittverfahren (702) oder durch das Laserlichtschnittverfahren (702) und wenigstens ein weiteres nichtinvasives Verfahren (602, 603) ermittelt wurden, gemeinsam für eine Beschreibung der Objekte (3) verwendet werden.

2. Verfahren nach Anspruch 1, **dadurch gekennzeichnet, dass** als wenigstens ein weiteres nichtinvasives Verfahren (602, 603) ein spektroskopisches Verfahren (603), insbesondere Röntgenspektroskopie, verwendet wird, mittels welchem wenigstens ein spektroskopisches Merkmal der Objekte (3) ermittelt wird.

3. Verfahren nach Anspruch 1 oder 2, **dadurch gekennzeichnet, dass** als wenigstens ein weiteres nichtinvasives Verfahren (602, 603) ein bildgebendes Verfahren (603), insbesondere Röntgenbildgebung, verwendet wird, mittels welchem wenigstens ein anatomisches und/oder morphologisches Merkmal (401, 402, 403, 404) der Objekte (3) ermittelt wird.

4. Verfahren nach Anspruch 2 oder 3, **dadurch gekennzeichnet, dass** als wenigstens ein Merkmal ein Füllungsgrad, ein Embryo- und/oder ein Nährgewebevolumen von Samen und/oder Früchten ermittelt wird.

5. Verfahren nach einem der vorstehenden Ansprüche, **dadurch gekennzeichnet, dass** als wenigstens ein weiteres nichtinvasives Verfahren (602, 603) ein optisches Verfahren (603) verwendet wird, mittels welchem wenigstens ein optisches Merkmal der Objekte (3) ermittelt wird.

6. Verfahren nach Anspruch 5, **dadurch gekennzeichnet, dass** als wenigstens ein optisches Merkmal eine Farbe und/oder eine Fluoreszenzeigenschaft ermittelt wird.

7. Verfahren nach einem der vorstehenden Ansprüche, **dadurch gekennzeichnet, dass** es eine Klassifizierung der Objekte (3) als Erdpartikel, Steine, Stengel, Blattreste, Blütenreste, Unkrautsamen und/oder Samen oder Früchte wenigstens einer Form- und/oder Größenklasse und/oder mit wenigstens einer morphologischen Eigenschaft beinhaltet.

8. Verfahren nach einem der vorstehenden Ansprüche, das zur Klassifizierung von in Zuckerrübensaatgut enthaltenen Objekten (3) verwendet wird.

9. Verfahren nach einem der vorstehenden Ansprüche, bei dem zur Klassifizierung eine Saatgutpartie als Saatgutstrom vorliegt.

10. Verfahren zur Untersuchung, Bonitierung und/oder Aufbereitung von Saatgut, bei dem in Saatgutpartien enthaltene Objekte unter Verwendung eines Verfahrens nach einem der vorstehenden Ansprüche klassifiziert werden.

11. Verwendung eines Verfahrens nach einem der Ansprüche 1 bis 10 zur Herstellung von nichtpilliertem, form- und größenkalibriertem Saatgut, insbesondere Zuckerrübensaatgut.

## Claims

1. Method for classifying (704) objects (3) contained in seed lots, wherein features of the objects (3) are determined using at least one non-invasive process (702, 703), **characterised in that** a light sectioning process (702) is used as at least one non-invasive process (602, 603), by means of which the objects (3) are measured three-dimensionally, while a spatial extent and/or a volume and/or a spatial shape and/or a surface quality of the objects is determined as at least one spatial feature of the objects (3), and **in that** features that have been obtained by the laser light sectioning process (702) or by the laser light sectioning process (702) and at least one further non-invasive process (602, 603) are used together for describing the objects (3) in order to classify them.

2. Method according to claim 1, **characterised in that** a spectroscopic process (603), particularly X-ray spectroscopy, is used as at least one further non-invasive process (602, 603), by means of which at least one spectroscopic feature of the objects (3) is determined.

3. Method according to claim 1 or 2, **characterised in that** an imaging process (603), particularly X-ray imaging, is used as at least one further non-invasive process (602, 603), by means of which at least one anatomical and/or morphological feature (401, 402, 403, 404) of the objects is determined.

4. Method according to claim 2 or 3, **characterised in that** a degree of fullness, an embryo volume and/or endosperm volume of seeds and/or fruits is determined as at least one feature.

5. Method according to one of the preceding claims, **characterised in that** an optical process (603) is used as at least one further non-invasive process (602, 603), by means of which at least one optical feature of the objects (3) is determined.

6. Method according to claim 5, **characterised in that** a colour and/or a fluorescence property is determined as at least one optical feature.

7. Method according to one of the preceding claims, **characterised in that** it comprises classifying the objects (3) as soil particles, stones, stalks, leaf residues, blossom residues, weed seeds and/or seeds or fruits of at least one category of shape and/or size and/or having at least one morphological property.

8. Method according to one of the preceding claims, which is used to classify objects (3) contained in sugar beet seed.

9. Method according to one of the preceding claims, wherein a seed lot is present as a stream of seed to be classified.

10. Method for examining, assessing and/or preparing seed, wherein objects contained in seed lots are classified using a method according to one of the preceding claims.

11. Use of a method according to one of claims 1 to 10, for preparing non-pelleted seed, graded according to shape and size, particularly sugar beet seed.

## Revendications

1. Procédé de classification (704) d'objets (3) contenus dans des lots de semences, dans lequel des caractéristiques des objets (3) sont déterminées en utilisant au moins un procédé non invasif (702, 703), **caractérisé en ce qu'**un procédé de la coupe lumineuse (702) est utilisé en tant qu'au moins un procédé non invasif (602, 603), au moyen duquel les objets (3) sont mesurés en trois dimensions, dans lequel une étendue spatiale et/ou un volume et/ou une forme spatiale et/ou une qualité de surface des objets est déterminé comme étant au moins une caractéristique spatiale des objets (3), et **en ce que** des caractéristiques qui ont été obtenues par le procédé de la coupe à la lumière laser (702) ou par le procédé de coupe à la lumière laser (702) et au moins un procédé non invasif supplémentaire (602, 603) sont utilisées conjointement pour décrire les objets (3) afin de les classer.

2. Procédé selon la revendication 1, **caractérisé en ce qu'**un procédé spectroscopique (603), en particulier une spectroscopie de rayons X, est utilisé comme au moins un procédé non invasif supplémentaire (602, 603), au moyen duquel au moins une caractéristique spectroscopique des objets (3) est déterminée.

3. Procédé selon la revendication 1 ou 2, **caractérisé en ce qu'**un procédé d'imagerie (603), en particulier une imagerie par rayons X, est utilisé comme au moins un procédé non invasif supplémentaire (602, 603), au moyen duquel au moins une caractéristique anatomique et/ou morphologique (401, 402, 403, 404) des objets est déterminée.

4. Procédé selon la revendication 2 ou 3, **caractérisé en ce qu'**un degré de remplissage, un volume d'embryon ou un volume d'endosperme de semences et/ou de fruits est déterminé comme étant au moins une caractéristique.

5. Procédé selon l'une des revendications précédentes, **caractérisé en ce qu'**un procédé optique (603) est utilisé comme au moins un procédé non invasif supplémentaire (602, 603), au moyen duquel au moins une caractéristique optique des objets (3) est déterminée.

6. Procédé selon la revendication 5, **caractérisé en ce qu'**une propriété de couleur et/ou de fluorescence est déterminée comme étant au moins une caractéristique optique.

7. Procédé selon l'une des revendications précédentes, **caractérisé en ce qu'**il comporte la classification des objets (3) en tant que particules de sol, pierres, tiges, résidus de feuilles, résidus de fleurs, graines de mauvaise herbe et/ou semences ou fruits d'au moins une catégorie de forme et/ou de taille et/ou ayant au moins une propriété morphologique.

8. Procédé selon l'une des revendications précédentes, qui est utilisé pour classer des objets (3) contenus dans une semence de betterave sucrière.

9. Procédé selon l'une des revendications précédentes, dans lequel un lot de semences est présent sous la forme d'un flux de semences à classer.

10. Procédé pour examiner, évaluer et/ou préparer une semence, dans lequel des objets contenus dans des lots de semences sont classés en utilisant un procédé selon l'une des revendications précédentes.

11. Utilisation d'un procédé selon l'une des revendications 1 à 10, pour préparer une semence non enrobée, calibrée en fonction de la forme et de la taille, en particulier une semence de betterave sucrière.
